# EUROPEAN PATENT APPLICATION

(11) **EP 1 213 501 A2**
(43) Date of publication of application: **12.06.2002**
(21) Application number: 01128825.5
(22) Date of filing: 04.12.2001
(51) Int. Cl.: F16D 3/00

(54) **Connecting device between a shaft of a motor and a speed reducer**

(30) Priority: 05.12.2000 IT BO000709
(71) Applicant: VARVEL S.p.A., 40056 Crespellano (Bologna) (IT)
(72) Inventor: Berselli, Francesco, 41013 Castelfranco Emilia (Bologna) (IT); Munerato, Claudio, 40133 Bologna (IT)
(74) Representative: Lanzoni, Luciano

(57) **Abstract**

Device for connecting a shaft of a motor, in particular an electric motor, to a speed reducer, comprising a bushing (2) able to be engaged by interference to the shaft (3); a sleeve (5) associated to an incoming shaft of the speed reducer and elements (15, 6) for connecting the bushing (2) to the sleeve (5).

## Description

The present invention relates to a device for connecting a shaft of a motor to a speed reducer. In particular the device can be advantageously used to connect the shaft of an electric motor to a gear speed reducer or to a stepless speed change gear.

Devices are known for connecting a drive shaft to a speed reducer, which comprise a frame with a through cavity housing a rotating body. The latter has at one end a sleeve able to be associated by fixed joint to the drive shaft and at the other end bears a pinion able to be coupled to a gear wheel of a speed reducer. To the frame is also connected a flange which allows to mount the device directly on the body of the motor. The shape and dimensions of the rotating body vary very widely, according to the type of motor and to the speed reducer the device has to connect. Since the shaft of the motor is fastened inside the sleeve by coupled joint, the inner dimensions of the sleeve shall depend strictly on those of the drive shaft. Similarly, the pinion shall have a toothing able to be coupled to the particular type of wheel used by the speed reducer and to obtain the required reduction ration.

The prior art solution, described above, has several drawbacks.

One drawback is linked to the fact that, for the reasons described above, the architecture of all essential elements of known devices strictly depends on the type of motor, and hence of shaft, whereto each device is to be associated. The manufacturer of the speed reducers therefore cannot produce a standard solution, but must be able to offer a wide range of embodiments of the device. This clearly increases production costs for each individual piece. The same reason also forces the manufacturer to hold a great number of pieces in stock if he wants to be able to fulfil any kind of request at short notice, with the consequent further increases in inventory costs.

Prior art devices also have drawbacks of a strictly technical nature. Because of the play between the drive shaft and the sleeve of the reducer, play that is necessary for their mounting, during the operation of the device and in particular in non-stationary operating conditions, relative motions occur between the drive shaft and the inner surface of the sleeve wherein the shaft is jointed. Said motions often create, between the two bodies, micro-welds which subsequently make it very difficult to disassemble the device from the motor when, for instance, it becomes necessary to replace the device in order to connect the motor to a different speed reducer. Said micro-welds can occur also at constant speeds of rotation, due to the non-uniform rotation of the drive shaft. In the case of electric motors, said non-uniform rotation is caused by harmonic waves present in the electrical distribution grid and by the limited number of poles that characterised the rotors of the more economical electric motors.

Lastly, prior art devices, because of the rigid structure of the connection between drive shaft and pinion, are characterised, under operating conditions, by vibrations due to the operating characteristics which are typical of gear wheels. These diminish the global effectiveness of the device, wear its components and make the device very noisy.

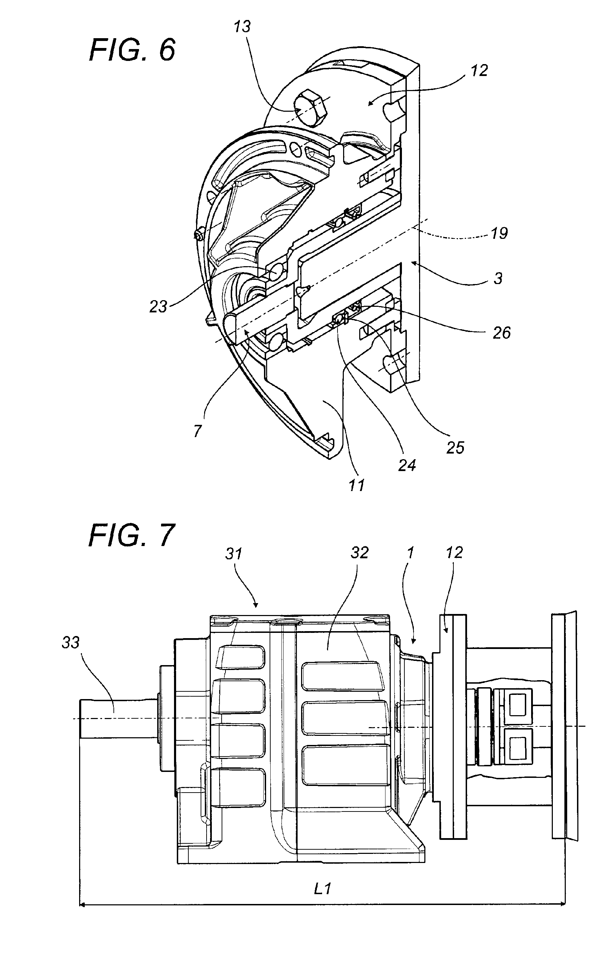

Currently, the adoption of a joint connecting motor and reducer entails an enlargement of the dimension at least equal to the length of the connecting joint, and hence a current reducer equipped with a joint has an overall length L1 (see Fig. 7).

The technical task of the invention is to provide a device that is easily disassembled from the motor, even after a long usage time.

A further task of the invention is to make available a device that allows to fulfil, at short notice, any kind of request whilst maintaining a small number of pieces in stock.

In accordance with an aspect of the present invention, a device is presented for connecting a shaft of a motor to a speed reducer as specified in the independent claim.

The dependent claims refer to preferred and advantageous embodiments of the invention.

Additional advantages of the invention are to obtain a low noise device able to dampen the vibrations that are generated in the motor and in the reducer, and to obtain a device for connecting a shaft of a motor to a speed reducer, characterised by low manufacturing and inventory costs.

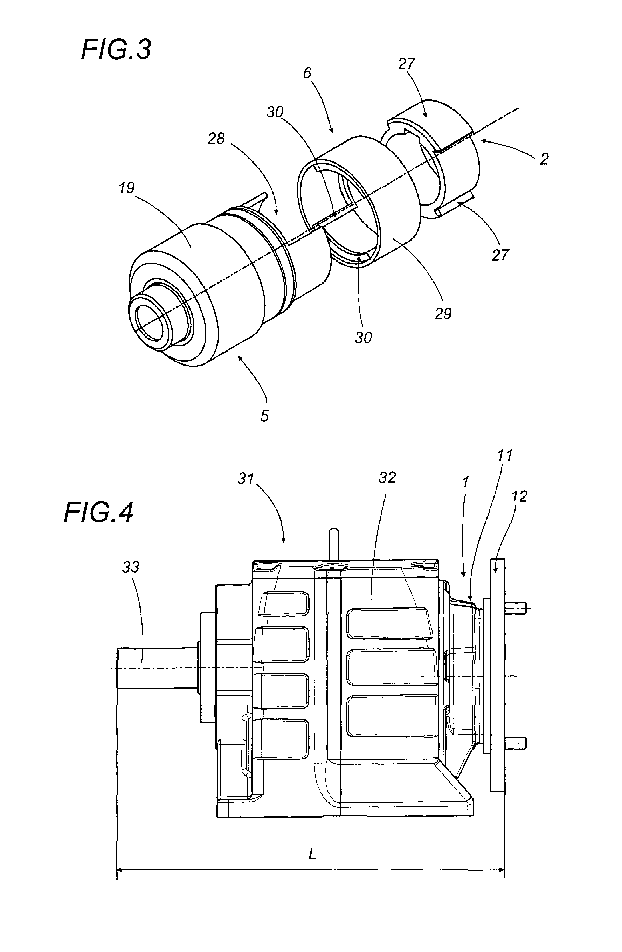

The device according to the invention (see Figure 4) with all the characteristics set out above, remains contained in the same housing normally provided for mounting the hollow sleeve destined to house the shaft of a standard electric motor, and hence a reducer according to the invention has a total length L lesser than the length L1 of current reducer and joint assemblies (see Figure 4).

Embodiments of the present invention are disclosed hereafter, purely by way of non limiting example, with the aid of the accompanying drawings, in which:
- Figure 1 shows a perspective view of the device with some parts removed the better to highlight others;
- Figure 2 shows an exploded view of the device of Figure 1;
- Figure 3 shows an exploded view of an alternative embodiment of a detail of the device of Figure 1;
- Figure 4 shows a lateral view of a speed reducer comprising the device of Figure 1;

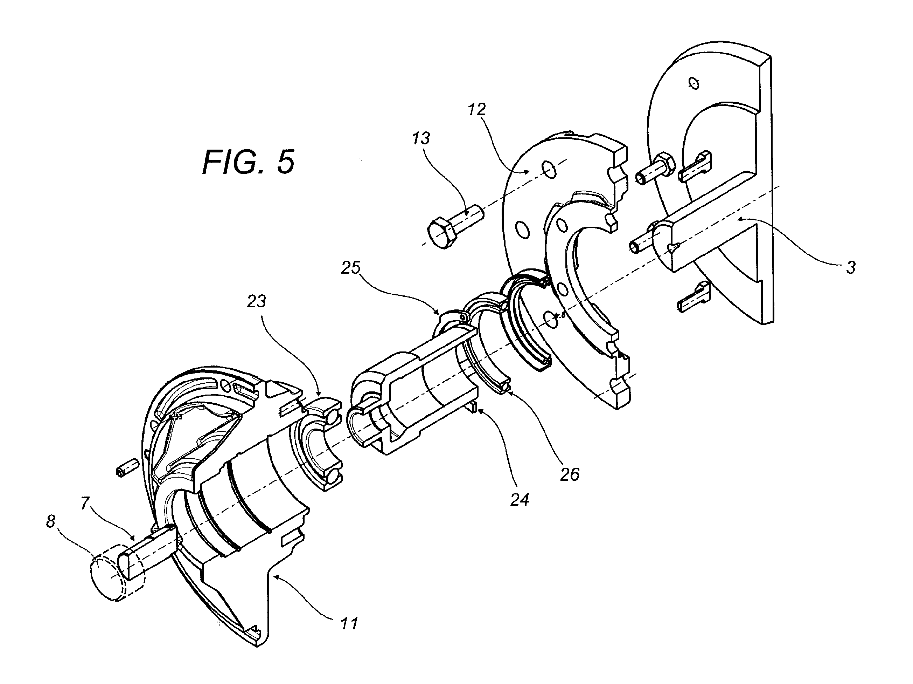

- Figure 5 shows an exploded view of a prior art device;
- Figure 6 shows a perspective view of Figure 5 with some parts removed, the better to identify others; and
- Figure 7 shows a lateral view of a prior art speed reducer provided with elastic joint.

With reference to the aforementioned drawings, the device according to the invention is globally indicated with the number 1.

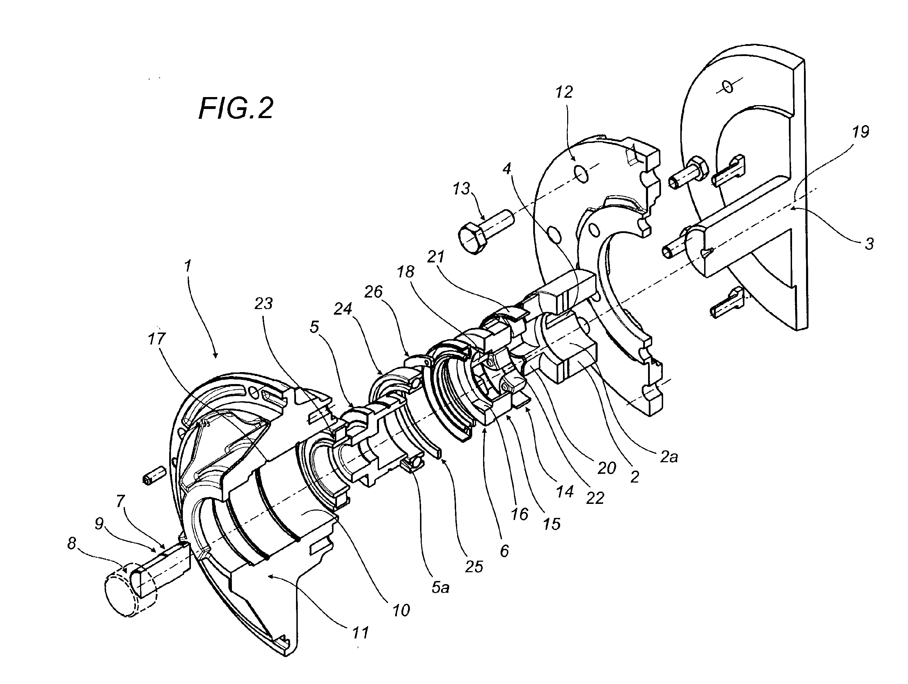

The device 1 comprises a bushing 2 able to be engaged without play to a shaft motor 3, in such a way as to be integral therewith under operative conditions. The bushing 2, as Figure 2 shows, has an inner surface 2a with a shape that is complementary to that of the drive shaft 3. In detail, the inner surface 2a has a coupling seat 4, for instance a seat for a tab, able to house a corresponding expansion, or a corresponding tab (not shown) of the drive shaft 3 which prevents, under operative conditions, the occurrence of relative rotations of the shaft 3 with respect to the bushing 2.

The absence of relative rotations is occasionally imposed by certain kinds of machines whereon the present motor-reducer set is mounted.

The device further comprises a sleeve 5 and means 6 for connecting the bushing 2 to the sleeve 5.

The sleeve 5 is operatively associated to a speed reducer, not shown in the drawings, which may be of any known kind.

Typically, the speed reducer comprises a plurality of gears moved by a driving shaft which is engaged by interference inside the sleeve 5.

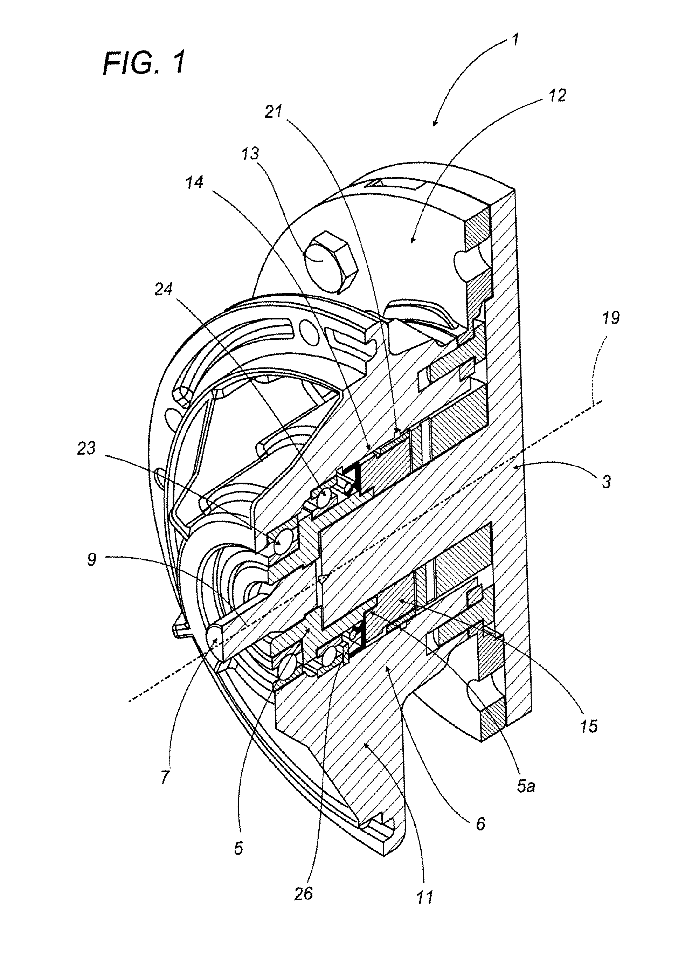

Alternatively, in the preferred embodiment, the same device 1 comprises a pinion 7, shown in Figure 2 and only partially in Figure 1, which, in addition to the toothing 8, has a pivot pin 9 associated by fixed joint to the sleeve 5. In this case the pinion 7 directly enmeshes a wheel of a speed reducer.

The bushing 2, the sleeve 5 and the means 6 for connecting the bushing 2 to the sleeve 5 are mounted inside a housing compartment, indicated with the number 10 in figure 2, obtained in a frame 11. In detail, the housing compartment 10 is constituted by a through, cylindrical opening obtained in the frame 11; the bushing 2 and the sleeve 5 are mounted coaxially along the axis of development of said opening.

A flange 12 is connected to the frame 11 to allow mounting the device on a motor (not shown), typically of the electric type, by means of a plurality of bolts 13.

The means 6 for connecting the bushing 2 to the sleeve 5 comprise an elastic joint 14 active between the sleeve 5 and the bushing 2.

In the preferred embodiment the elastic joint 14 comprises a rigid ring 15 positioned between the sleeve 5 and the bushing 2 and coaxial to both. The ring 15 is associated, by fixed joint, to the sleeve 5; in detail, said connection is obtained by inserting a portion 5a of the sleeve inside the ring 15 in such a way as to bring a pair of planar abutment surfaces 16 of the ring 15 to bear against a pair of planar surfaces 17 of the sleeve 5. The ring 15 also has a plurality of connecting teeth 18 which develop towards the bushing 2 in a direction parallel to the axis 19 of the ring 15. In turn, the bushing 2 has a plurality of driving teeth 20 developing in the direction of the axis of the bushing 2, which coincides with the axis 19 of the ring 15. The elastic joint 14 lastly comprises a circular band 21, preferably made of elastomeric material, coaxial to the ring 15 and having a plurality of elastic inserts 22, typically made of the same material as the band 21. The elastic joint 14 and the bushing 2 are mounted in such a way that the aforesaid connecting teeth 18 are positioned between the driving teeth 20. Each of the elastic inserts 22 is then inserted between a connecting tooth 18 and a driving tooth 20, thereby achieving an elastic connection between the bushing 2 and the rigid ring 15. In this embodiment the device further comprise a first and a second bearing 23, 24 for mounting the sleeve 5 in rotary fashion on the frame 11. Along the axis 19, after the second bearing 24, between the bushing 5 and the frame 11 are lastly positioned an elastic safety ring 25 and a sealing ring 26.

In a second embodiment the connection between the bushing 2 and the sleeve 5 is obtained in an alternative manner, as shown in Figure 3. In this case, the bushing 2 has a plurality of engaging expansions 27, each of which develops along a circumference arc having its centre on the axis 19. Said engaging expansions 27 are housed in respective seats 28 obtained in the sleeve 5. In this embodiment the elastic joint 14 comprises a support ring 29 and a plurality of elastic inserts 30 positioned between the seats 28 and the engaging expansions 27.

A device of the kind described above can advantageously integrated in a speed reducer 31 for electric motors 3, as shown in Figure 4. In this case the frame 11 is mounted directly on the box body 32 which encloses the gears of the reducer. The drive shaft 3, not shown in Figure 4, is inserted into the bushing 2, as described above. Inside the frame 11 the rotation of the drive shaft is transmitted by the means 6 to the sleeve 5 and hence to the pinion 7. The latter enmeshes at least one of the gear wheels which, typically, are present inside the reducer to move a driven shaft, indicated with number 33 in Figure 4, at a smaller number of rotations than the drive shaft 3.

The present invention achieves important advantages. The illustrated solution allows to obtain devices constituted by components whose geometries are only minimally dependent on the type of motor or speed reducer with which the device is to be used. The sleeve 5, the frame 11 and all the means 6 for connecting the sleeve 5 to the bushing 2 can be made in a standardised manner, independent of the usage whereto the device is destined. These universal components can be mutually connected during the pre-assembly of the device to obtain a standard assembly whereto are associated, only subsequently, the components that depend on the motor, i.e. the bushing 2 and the flange 12, and those that depend on the speed reducer, like the pinion 7.

This solution allows to hold in stock a limited number of pieces, whilst also to be able to meet every kind of request at short notice.

In light of the above observations it is also clear that the invention allows considerably to reduce the costs linked to the production of the device in question. From the mechanical viewpoint, the invention has the further advantage of being easily disassembled, even after a prolonged usage. The means 6 for connecting the bushing 2 to the sleeve 5 make the connection between the drive shaft 3 and the speed reducer partially elastic. This prevents the formation, between the drive shaft 3 and the sleeve 5, of micro-welds which would make it very difficult to separate the two bodies when, for instance, maintenance operations are to be performed.

This kind of connection also allows slight offsets between the axis of the motor shaft and the bushing of the reducer, so that it is possible to obtain couplings with greater degrees of freedom between the motor and the speed reducer.

The same characteristic of elasticity of the elements 22 or 30 between the drive shaft 3 and the sleeve 5 further allows the device to lower the vibration level in the reducer during its operation. This entails a better transmission of the motion from the drive shaft to the speed reducer, a limited wear of the components involved in said transmission, a drastic decrease in the noisiness of the device, a reduced conduction of the heat generated by the motor towards the reducer and a containment of the dimensions of the motor-reducer set with standard electrical coupling to a reducer.

## Claims

1. Device for connecting a shaft of a motor, in particular electric, to a speed reducer, **characterised in that** it comprises:
a bushing (2) able to be engaged without play to the drive shaft (3), said bushing (2) presenting an inner (2a) with a shape complementary to that of the drive shaft (3);
a sleeve (5) operatively associated to the speed reducer;
means (6) for connecting the bushing (2) to the sleeve (5).

2. Device as claimed in claim 1, **characterised in that** it comprises:
a frame (11) defining a van (10) for housing the bushing (2), of the sleeve (5) and of the means (6) for connecting the bushing (2) to the sleeve (5);
and
a flange (12) connected to the frame (11) to connect the device to the motor.

3. Device as claimed in one of the claims 1 or 2, **characterised in that** the sleeve (5) is coaxial to the bushing (2).

4. Device as claimed in any of the previous claims, **characterised in that** it comprises a pinion (7) having a pivot pin (9) associated it by fixed joint to the sleeve (5).

5. Device as claimed in any of the previous claims, **characterised in that** said means (6) for connecting the bushing (2) to the sleeve (5) comprise an elastic joint (14) active between the sleeve (5) and the bushing (2).

6. Device as claimed in claim 5, **characterised in that** said bushing (2) has a plurality of engagement expansions (27); the sleeve (5) has a plurality of seats (28) for housing said engagement expansions (27); and the elastic joint (14) comprises a plurality of elastic inserts (30) positioned between said housing seats (28) and said engagement expansions (27).

7. Device as claimed in claim 5, **characterised in that** said bushing (2) has a plurality of driving teeth (20) which develop in a direction parallel to the axis of the bushing (19) and **in that** said elastic joint (14) comprises a rigid ring (15) associated by fixed jointing to the sleeve (5) and having a plurality of connecting teeth (18) which develop towards said bushing (2) in a direction parallel to the axis of the ring (19); and the elastic joint (14) having a plurality of elastic inserts (22), each of said elastic inserts (22) being inserted between a driving tooth (20) and a connecting tooth (18).

8. Speed reducer (31) for electric motors, **characterised in that** it comprises a device (1) as claimed in any of the previous claims.
